# EUROPÄISCHE PATENTSCHRIFT

(11) **EP 1 026 416 B1**
(45) Veröffentlichungstag und Bekanntmachung des Hinweises auf die Patenterteilung: **06.10.2004**
(21) Anmeldenummer: 99250434.0
(22) Anmeldetag: 10.12.1999
(51) Int. Cl.: F16D 3/78, F16D 3/79

(54) **Konusschraubverbindung für Lamellenpaket-Wellenkupplungen**
Conical screw connection for lammelae shaft coupling
Raccord fileté cônique pour accouplement d'arbres au moyen de disques métalliques

(30) Priorität: 08.02.1999 DE 19906168
(43) Veröffentlichungstag der Anmeldung: 09.08.2000
(73) Patentinhaber: ATEC-Weiss GmbH & Co. KG, D-48691 Vreden (DE)
(72) Erfinder: Valtwies, Ewald, 46354 Südlohn (DE); Uhlen, Stefan, 49740 Haselünne (DE)
(74) Vertreter: COHAUSZ & FLORACK

(56) Entgegenhaltungen:
- DE-A- 19 625 318
- US-A- 3 953 906
- US-A- 4 850 771

## Beschreibung

Die Erfindung betrifft eine Konusschraubverbindung für eine Lamellenpaket-Wellenkupplung mit einem Spannbolzen, einer auf dem Spannbolzen angeordneten, einen Kragen aufweisenden ersten Spannbüchse, mindestens einer von der ersten Spannbüchse getragenen, einen Kragen aufweisenden zweiten Spannbüchse, auf der Lamellen des Lamellenpakets fixierbar sind, wobei der Sitz zwischen dem Spannbolzen und der ersten Spannbüchse konisch und der Sitz zwischen der ersten Spannbüchse und der zweiten Spannbüchse zylindrisch ausgebildet sind, und mit einem Lamellen des Lamellenpakets axial einspannenden Spannelement, wobei der Spannbolzen eine Gewindebohrung für eine Schraube aufweist, deren Kopf sich an dem Spannelement abstützt.

Eine derartige Konusschraubverbindung ist aus der DE 196 25 318 A1 bekannt. Das Spannelement besteht dabei aus einer Mutter, die auf ein an einem Ende der ersten Spannbüchse vorgesehenes Außengewinde aufgeschraubt ist und das Lamellenpaket axial einspannt. Die Mutter ist außenseitig mit Nuten versehen, in die ein geeignetes Werkzeug zum Anziehen der Mutter eingreifen kann. Ferner weist die Mutter eine Bohrung auf, durch welche die in die Gewindebohrung des Spannbolzens eindrehbare Schraube geführt ist, deren Kopf sich an der Mutter abstützt. Nachdem die zwischen dem Kragen der zweiten Spannbüchse und dem zugeordneten Spannring gelegenen Lamellen des Lamellenpakets durch Anziehen der Mutter axial eingespannt sind, wird die dem Spannbolzen zugeordnete Schraube mit einem weiteren Werkzeug angezogen, wodurch der Spannbolzen in die erste Spannbüchse eingezogen wird und diese sowie die zweite Spannbüchse radial aufweitet, so daß der Lamellenpaketkranz auch radial eingespannt wird. Diese Konusschraubverbindung hat sich in der Praxis grundsätzlich bewährt.

Aufgabe der vorliegenden Erfindung ist es, eine Konusschraubverbindung bereitzustellen, die eine optimale Einspannung des Lamellenpakets unter Verwendung des selben Werkzeugs für die axiale und radiale Einspannung der Lamellen ermöglicht.

Diese Aufgabe wird bei einer Konusschraubverbindung der eingangs genannten Art dadurch gelöst, daß zwischen dem Spannbolzen und der ersten Spannbüchse eine Preß- oder Übergangspassung ausgebildet ist derart, daß durch Anziehen der Schraube zuerst die Lamellen des Lamellenpakets axial eingespannt und sodann die Spannbüchsen radial aufgeweitet werden.

Die erfindungsgemäße Konusschraubverbindung zeichnet sich dadurch aus, daß die Lamellen durch Anziehen der in die Gewindebohrung des Spannbolzens eingedrehten Schraube zuerst axial eingespannt werden, so daß sie dicht aneinander liegen, und somit die Voraussetzung für eine optimale Einspannung des Lamellenpakets geschaffen wird. Durch weiteres Anziehen der Schraube mit dem selben Werkzeug wird dann der Spannbolzen in die erste Spannbüchse eingezogen, wobei sowohl die erste als auch die darauf angeordnete zweite Spannbüchse radial aufgeweitet werden. Da dabei das Werkzeug nicht gewechselt werden muß, ergibt sich zugleich eine vereinfachte Montage.

Gegenüber der aus der DE 196 25 318 A1 bekannten Konusschraubverbindung zeichnet sich die erfindungsgemäße Konusschraubverbindung zudem durch geringere Herstellungskosten aus, da an dem die Lamellen axial einspannenden Spannelement und der ersten Spannbüchse keine Gewinde mehr hergestellt werden müssen. Das Spannelement kann bei der erfindungsgemäßen Konusschraubverbindung mittels der dem Spannbolzen zugeordneten Schraube axial gegen die zweite Spannbüchse bzw. den Spannring gespannt werden.

Die Preß- bzw. Übergangspassung der erfindungsgemäßen Konusschraubverbindung ist vorzugsweise durch einen zylindrischen Absatz an der Einstecköffnung der ersten Spannbüchse und durch einen zylindrischen Kragen am Spannbolzen gebildet, wobei der Innendurchmesser des zylindrischen Absatzes geringfügig kleiner als der Außendurchmesser des Kragens des Spannbolzens ist. Diese Ausgestaltung weist einen einfachen Aufbau auf und läßt sich relativ kostengünstig herstellen.

Vorteilhaft ist es ferner, wenn die Tiefe des Absatzes im wesentlichen gleich der Breite des Kragens des Spannbolzens ist. Bei dieser Ausgestaltung läßt sich die maximale radiale Aufweitung der Spannbüchsen leicht erkennen, da in diesem Zustand das Stirnende des Spannbolzens mit dem Stirnende der ersten Spannbüchse bündig abschließt. Durch eine Kontrolle der Lage der Stirnenden zueinander kann somit ein definiertes Anziehen der Konusschraubverbindung sichergestellt werden.

Nach einer bevorzugten Ausgestaltung kann das die Lamellen axial einspannende Spannelement eine Basis und einen über die Basis hinausragenden Kragen aufweisen, der sich an dem Kragen der zweiten Spannbüchse oder einem zugeordneten Spannring abstützt und das Ende der ersten Spannbüchse mit radialem Spiel umfaßt.

Nach einer weiteren bevorzugten Ausgestaltung kann der zweiten Spannbüchse ein Spannring zugeordnet sein, wobei die Lamellen der Lamellenpakete zwischen dem Kragen der zweiten Spannbüchse und dem zugeordneten Spannring axial fixierbar sind.

Für eine einfache Demontage der erfindungsgemäßen Konusschraubverbindung ist es vorteilhaft, wenn der Spannbolzen an dem der Gewindebohrung gegenüberliegenden Ende eine weitere Gewindebohrung aufweist. Die beiden Gewindebohrungen sind dabei vorzugsweise mit gleichen Abmessungen ausgeführt. Zur Demontage des in der ersten Spannbüchse klemmenden Spannbolzens kann die in der Gewindebohrung eingedrehte Schraube in Kombination mit dem Spannelement in die gegenüberliegende Gewindebohrung eingedreht werden, wobei das Spannelement dann zusammen mit der Schraube als Abzieher dient.

Nachstehend wird die Erfindung anhand einer ein Ausführungsbeispiel darstellenden Zeichnung erläutert.

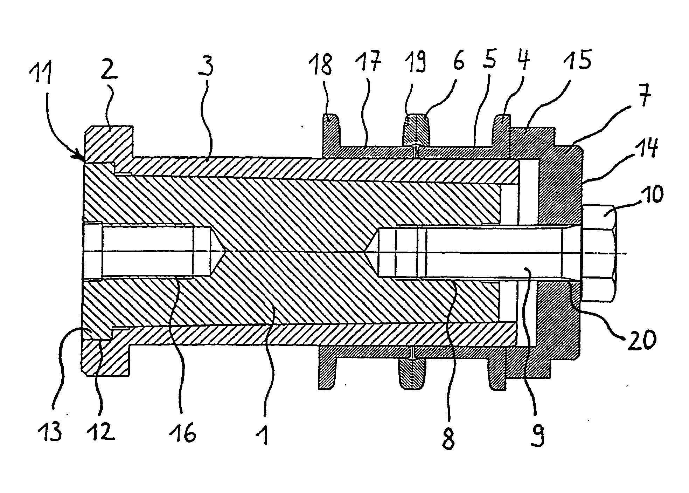

Die einzige Figur der Zeichnung zeigt einen Längsschnitt durch eine erfindungsgemäße Konusschraubverbindung im montierten Zustand. Die Lamellen und der Anschlußflansch einer so ausgestatteten Lamellenpaket-Wellenkupplung sind nicht dargestellt.

Die Konusschraubverbindung weist einen Spannbolzen 1 und eine darauf angeordnete erste Spannbüchse 3 mit einem Kragen 2 auf, wobei der Sitz zwischen dem Spannbolzen 1 und der Spannbüchse 3 konisch ausgebildet ist. Die Spannbüchse 3 hat eine zylindrische Mantelfläche und wird in eine Bohrung des nicht dargestellten Anschlußflansches der Wellenkupplung eingesteckt, wobei der Kragen 2 der Spannbüchse 3 an dem Flansch anliegt.

Auf der zylindrischen Mantelfläche der Spannbüchse 3 sind eine zweite Spannbüchse 5 und eine dritte Spannbüchse 17 angeordnet, die im nicht gespannten Zustand der Konusschraubverbindung, d.h., solange die erste Spannbüchse 3 durch den Spannbolzen 1 noch nicht aufgeweitet wurde, axial verschiebbar sind. Die zweite Spannbüchse 5 und eine dritte Spannbüchse 17 weisen ebenfalls jeweils einen Kragen 4 bzw. 18 auf. Ferner ist ihnen jeweils ein Spannring 6 bzw. 19 zugeordnet. Die nicht dargestellten Lamellen sind mit ihren Bohrungen formschlüssig auf der zweiten bzw. dritten Spannbüchse 5, 17 aufgeschoben. Im nicht gespannten Zustand der Konusschraubverbindung weisen die Lamellen auf der zylindrischen Mantelfläche der zweiten bzw. dritten Spannbüchse 5, 17 ein axiales Spiel auf.

An der zweiten Spannbüchse 5 liegt ein Spannelement 7 an, das eine Bohrung 20 aufweist, in welche eine Spannschraube 10 eingesteckt ist. Die Spannschraube 9 ist in eine in der Mittelachse des Spannbolzens 1 ausgebildete Gewindebohrung 8 eingeschraubt. Der Kopf 10 der Schraube 9 ist an einer Basis 14 des Spannelements 7 abgestützt, welches einen die erste Spannbüchse 3 mit radialem Spiel umfassenden Kragen 15 aufweist, mit dem es an der zweiten Spannbüchse 5 anliegt. Durch Anziehen der Schraube 9 werden die Lamellen zwischen dem Kragen 4, 18 der jeweiligen Spannbüchse 5, 17 und dem jeweils zugeordneten Spannring 6, 19 axial eingespannt, wobei sich der Kragen 18 der dritten Spannbüchse 17 an dem Anschlußflansch der Kupplung (nicht gezeigt) abstützt.

Es ist zu erkennen, daß an der Einstecköffnung der ersten Spannbüchse 3 ein zylindrischer Absatz 12 ausgebildet ist, wobei der Spannbolzen 1 einen zylindrischen Kragen 13 aufweist, der in dem Absatz 12 aufgenommen ist. Der Innendurchmesser des zylindrischen Absatzes 12 ist geringfügig kleiner als der Außendurchmesser des Kragens 13. Erfindungsgemäß ist zwischen der ersten Spannbüchse 3 und dem Spannbolzen 1 somit eine Preßoder Übergangspassung 11 in der Weise ausgebildet, daß beim Anziehen der Spannschraube 9 zuerst die Lamellen des Lamellenpakets axial eingespannt werden und sodann eine in radialer Richtung wirkende Druckkraft erzeugt wird, durch welche die Spannbüchsen 3, 5, 17 radial aufgeweitet werden. Durch diese radiale Druckspannung werden alle Toleranzen zwischen den Spannbüchsen 3, 5, 17 und den Lamellen ausgeglichen sowie eine Versteifung des jeweiligen Schraubpunktes erzielt.

In der Zeichnung ist ferner zu erkennen, daß die Tiefe des zylindrischen Absatzes 12 in der ersten Spannbüchse im wesentlichen gleich der Breite des Kragens 13 des Spannbolzens 1 ist. Wenn das Stirnende des Spannbolzens 1 mit dem Stirnende der Spannbüchse 3 bündig abschließt, ist dementsprechend die maximale radiale Aufweitung der Spannbüchsen 3, 5, 17 erreicht. Das Aufziehmaß der Konusschraubverbindung kann somit anhand der relativen Lage der Stirnenden kontrolliert werden.

An dem der Gewindebohrung 8 gegenüberliegenden Ende ist der Spannbolzen 1 mit einer weiteren Gewindebohrung 16 versehen. Die beiden Gewindebohrungen 8 und 16 haben den gleichen Gewindedurchmesser und sind im wesentlichen gleich tief. Die zweite Gewindebohrung 16 dient dem Lösen der Konusschraubverbindung. Hierzu wird die Spannschraube 9 gelöst und in Kombination mit dem Spannelement 7 in die gegenüberliegende Gewindebohrung 16 eingeschraubt. Der Kragen 15 des Spannelements 7 stützt sich dabei an der ersten Spannbüchse 3 ab.

Die Erfindung ist nicht auf das in der Zeichnung dargestellte Ausführungsbeispiel beschränkt. So kann beispielsweise auf der ersten Spannbüchse 3 nur eine weitere Spannbüchse mit einem zugeordneten Spannring angeordnet sein.

## Patentansprüche

1. Konusschraubverbindung für eine Lamellenpaket-Wellenkupplung mit einem Spannbolzen (1), einer auf dem Spannbolzen angeordneten, einen Kragen (2) aufweisenden ersten Spannbüchse (3), mindestens einer von der ersten Spannbüchse getragenen, einen Kragen (4) aufweisenden zweiten Spannbüchse (5), auf der Lamellen des Lamellenpakets fixierbar sind, wobei der Sitz zwischen dem Spannbolzen (1) und der ersten Spannbüchse (3) konisch und der Sitz zwischen der ersten Spannbüchse (3) und der zweiten Spannbüchse (5) zylindrisch ausgebildet sind, und mit einem die Lamellen des Lamellenpakets axial einspannenden Spannelement (7), wobei der Spannbolzen eine Gewindebohrung (8) für eine Schraube (9) aufweist, deren Kopf (10) sich an dem Spannelement (7) abstützt,
**dadurch gekennzeichnet, daß** zwischen dem Spannbolzen und der ersten Spannbüchse eine Preß- oder Übergangspassung (11) ausgebildet ist derart, daß durch Anziehen der Schraube (9) zuerst die Lamellen des Lamellenpakets axial eingespannt und sodann die Spannbüchsen (3, 5) radial aufgeweitet werden.

2. Konusschraubverbindung nach Anspruch 1,
**dadurch gekennzeichnet, daß** die Preß- bzw. Übergangspassung (11) durch einen zylindrischen Absatz (12) an der Einstecköffnung der ersten Spannbüchse (3) und einen zylindrischen Kragen (13) am Spannbolzen gebildet ist, wobei der Innendurchmesser des zylindrischen Absatzes (12) geringfügig kleiner als der Außendurchmesser des Kragens (13) des Spannbolzens ist.

3. Konusschraubverbindung nach Anspruch 2,
**dadurch gekennzeichnet, daß** die Tiefe des Absatzes (12) im wesentlichen gleich der Breite des Kragens (13) des Spannbolzens ist.

4. Konusschraubverbindung nach Anspruch 2 oder 3,
**dadurch gekennzeichnet, daß** das Spannelement (7) eine Basis (14) und einen über die Basis hinausragenden Kragen (15) aufweist, der sich an dem Kragen (4) der zweiten Spannbüchse oder einem der zweiten Spannbüchse zugeordneten Spannring (6) abstützt und das dem Absatz (12) gegenüberliegende Ende der ersten Spannbüchse (3) mit radialem Spiel umfaßt.

5. Konusschraubverbindung nach einem der vorstehenden Ansprüche, **dadurch gekennzeichnet, daß** der zweiten Spannbüchse (5, 17) ein Spannring (6, 19) zugeordnet ist, wobei die Lamellen des Lamellenpakets zwischen dem Kragen (4, 18) der zweiten Spannbüchse (5, 17) und dem zugeordneten Spannring (6, 19) axial fixierbar sind.

6. Konusschraubverbindung nach einem der vorstehenden Ansprüche, **dadurch gekennzeichnet, daß** der Spannbolzen an dem der Gewindebohrung (8) gegenüberliegenden Ende eine weitere Gewindebohrung (16) aufweist.

## Claims

1. A conical screw connection for a multi-disk shaft coupling with a tension bolt (1), a first spring collet (3) arranged on the tension bolt and having a collar (2), at least one second spring collet (5) supported by the first spring collet and having a collar (4), with the disks of the multi-disk set being securable on the second spring collet, and with the seat between the tension bolt (1) and the first spring collet (3) being conical in shape, and the seat between the first spring collet (3) and the second spring collet (5) being cylindrical in shape, and with a tension element (7) which axially clamps the disks of the multi-disk set, wherein the tension bolt has a threaded borehole (8) for a screw (9) whose head (10) is supported on the tension element (7), **characterized in that** a force fit or a transition fit (11) is created between the tension bolt and the first spring collet such that by tightening the screw (9), first the disks of the multi-disk set are clamped axially and then the spring collets (3, 5) are widened radially.

2. A conical screw connection according to Claim 1, **characterized in that** the force fit or the transition fit (11) is formed by a cylindrical shoulder (12) at the insertion opening of the first spring collet (3) and a cylindrical collar (13) on the tension bolt, with the inside diameter of the cylindrical shoulder (12) being slightly smaller than the outside diameter of the collar (13) of the tension bolt.

3. A conical screw connection according to Claim 2, **characterized in that** the depth of the shoulder (12) is essentially equal to the width of the collar (13) of the tension bolt.

4. A conical screw connection according to Claim 2 or 3, **characterized in that** the tension element (7) has a base (14) and a collar (15) projecting above the base and supported on the collar (4) of the second spring collet or on a tension ring (6) provided for the second spring collet, and encompassing the end of the first spring collet (3) opposite the shoulder (12) with a radial clearance.

5. A conical screw connection according to one of the preceding claims, **characterized in that** the second spring collet (5, 17) is provided with a tension ring (6, 19), with the disks of the multi-disk set being axially securable between the collar (4, 18) of the second spring collet (5, 17) and the respective tension ring (6, 19).

6. A conical screw connection according to one of the preceding claims, **characterized in that** the tension bolt has another threaded borehole (16) on the end opposite the first threaded borehole (8).

## Revendications

1. Liaison conique à visser pour un accouplement d'arbre à faisceau de lames avec un axe de serrage (1), une première douille de serrage (3) présentant un épaulement (2) et disposée sur l'axe de serrage, au moins une deuxième douille de serrage (5) présentant un épaulement (4) et portée par la première douille de serrage, et sur laquelle des lames du faisceau de lames peuvent être immobilisées, le siège entre l'axe de serrage (1) et la première douille de serrage (3) étant de forme conique et le siège entre la première douille de serrage (3) et la deuxième douille de serrage (5) étant de forme cylindrique, et avec un élément de serrage (7) serrant les lames du faisceau de lames dans la direction axiale, l'axe de serrage étant muni d'un taraudage (8) pour une vis (9) dont la tête (10) s'appuie sur l'élément de serrage (7), **caractérisée en ce que**, entre l'axe de serrage et la première douille de serrage, un ajustement serré ou de transition (11) est formé de telle sorte que le serrage de la vis (9) entraîne dans un premier temps le serrage axial des lames du faisceau de lames, puis l'écartement radial des douilles de serrage (3, 5) .

2. Liaison conique à visser selon la revendication 1, **caractérisée en ce que** l'ajustement serré ou de transition (11) est formé par un décrochement cylindrique (12) sur l'ouverture d'insertion de la première douille de serrage (3) et par un épaulement cylindrique (13) sur l'axe de serrage, le diamètre intérieur du décrochement cylindrique (12) étant légèrement inférieur au diamètre extérieur de l'épaulement (13) de l'axe de serrage.

3. Liaison conique à visser selon la revendication 2, **caractérisée en ce que** la profondeur du décrochement (12) est sensiblement égale à la largeur de l'épaulement (13) de l'axe de serrage.

4. Liaison conique à visser selon la revendication 2 ou 3, **caractérisée en ce que** l'élément de serrage (7) est muni d'une embase (14) et d'un épaulement (15) dépassant de l'embase, qui s'appuie sur l'épaulement (4) de la deuxième douille de serrage ou sur une bague de serrage (6) affectée à la deuxième douille de serrage et qui entoure avec un jeu radial l'extrémité de la première douille de serrage (3) opposée au décrochement (12).

5. Liaison conique à visser selon l'une des revendications précédentes, **caractérisée en ce qu'**une bague de serrage (6, 19) est affectée à la deuxième douille de serrage (5, 17), les lames du faisceau de lames pouvant être immobilisées dans le sens axial entre l'épaulement (4, 18) de la deuxième douille de serrage (5, 17) et la bague de serrage (6, 19) qui lui est affectée.

6. Liaison conique à visser selon l'une des revendications précédentes, **caractérisée en ce que** l'axe de serrage présente un autre taraudage (16) à l'extrémité opposée au taraudage (8).
